# EUROPEAN PATENT APPLICATION

(11) **EP 4 674 684 A1**
(43) Date of publication of application: **07.01.2026**
(21) Application number: 24186552.6
(22) Date of filing: 04.07.2024
(51) Int. Cl.: B60N 2/68, B60N 2/803

(54) **FRAME FOR A BACKREST OF A PASSENGER SEAT**

(71) Applicant: Franz Kiel GmbH, 86720 Nördlingen (DE)
(72) Inventor: Wiatrowski, Tomasz, 61-160 Daszewice (PL); Smykowski, Jedrzej, 62-069 Dabrowka (PL); Siemion, Karol, 61-628 Poznan (PL)
(74) Representative: Schmid, Wolfgang

(57) **Abstract**

A frame (4) for a backrest (2) of a passenger seat (1), in particular a passenger seat (1) in a bus, train and the like, comprises:
- two lateral consoles (12),
- two support consoles (15),
- an upper headrest frame part (13) being connected to the two lateral consoles (12) and/or the two support consoles (15).

The lateral consoles (12) and the support consoles (15) are connected to each other by means of crimping connections (16).

## Description

The invention relates to a frame for a backrest of a passenger seat, in particular for a passenger seat in a bus, train and the like, comprising two lateral consoles, two support consoles, and an upper headrest frame part being connected to the two lateral consoles and/or the two support consoles. The invention also refers to a backrest of a passenger seat comprising a frame as well as to a passenger seat, in particular for a bus, train and the like having a seat cushion and a backrest. Furthermore, the invention relates to a method for manufacturing a frame for a backrest of a passenger seat.

Regarding the prior art, reference is made to EP 1 190 892 B1, DE 10 2004 003 080 A1, and DE 10 2008 030 169 A1.

The frames of these backrests consist of steel parts which are mostly welded together. The structural strength of the backrest is completely based on the structural strength of the frame itself. All additional accessories, e.g. a rear cover or plastic inserts, are only visual parts that do not have any significance regarding the stiffness and strength of the seat.

The necessary welding operations require a rather large effort. Furthermore, due to the welding connection between the parts thereof, the recycling of these frames is quite complicated.

It is therefore an object of the present invention to create a frame for a backrest of a passenger seat, in particular a passenger seat in a bus, train and the like, which is easier to manufacture and to recycle.

According to the invention, this object is solved by the features of claim 1.

According to the present invention, a frame for a backrest for a passenger seat, in particular a passenger seat in a bus, train and the like, comprises to lateral consoles, two support consoles, and an upper headrest frame part which is connected to the two lateral consoles and/or the two support consoles. The lateral consoles and the support consoles are connected to each other by means of crimping connections.

With these crimping connections it is very easy to connect the lateral consoles and the support consoles which reduces the costs of the frame according to the present invention. For recycling, the crimping connections can very easily be disassembled and the disassembled parts can be recycled separately.

Furthermore, by means of the crimping connections it is not necessary to use any welding operations to produce the frame according to the present invention. Accordingly, it is also not necessary to clean the frame after any welding operations, since these are not used anymore.

Still further, it is not necessary to coat any surface of the parts forming the backrest as a rust protection after the assembly of the parts, since it is possible to e.g. galvanize the metal parts as raw materials.

According to the present invention, the frame has an optimal structural strength design which reduces the weight thereof as well as the consumption of raw material.

According to an advantageous embodiment of the invention, the crimping connections extend at least approximately around the full circumference of the lateral consoles and the support consoles. This leads to a very good connection between the lateral consoles and the support consoles.

Furthermore, it is possible that the lateral consoles and the support consoles are connected to each other by means of pre-shaped lock connections. The pre-shaped lock connections can comprise pre-shaped portions on the lateral consoles as well as on the support consoles which are connected by a forming operation of these two portions. This is a further possibility to connect these two parts of the frame in order to improve the effect provided by the crimping connections.

Alternatively or additionally, also in order to improve the effect of the crimping connections, it can be provided that the lateral consoles and the support consoles are connected to each other by means of plastic deformation of embossed hole flanges. The embossed hole flanges can comprise pre-shaped portions on the lateral consoles as well as on the support consoles which are connected by a forming operation of these two portions. Due to the hole in the embossed hole flanges there is a larger area to connect the lateral consoles with the support consoles.

A backrest for a passenger seat, in particular a passenger seat in a bus, train and the like, comprising a frame as referred to above and an insert connected to the frame is contained in claim 5.

This backrest according to the invention can be produced in much shorter time than the backrests known from the prior art, thereby saving production costs and reducing the carbon footprint. Furthermore, the backrest can be produced in form of modules, in particular using eco-friendly materials which are fully recycleable. In particular, the different parts can be recycled apart from each other. Such a backrest can have a composite or hybrid design.

Claim 6 refers to a passenger seat, in particular for a bus, train and the like, having a seat cushion and a backrest according to claim 5.

This passenger seat has all the above mentioned advantages of the backrest which is part of the passenger seat and, accordingly, can be produced in a more time and cost effective manner.

In claim 7 a method for manufacturing a frame for a backrest of a passenger seat, in particular for a passenger seat in a bus, train or the like, is stated.

This method comprises providing two lateral consoles, providing two support consoles, and providing an upper headrest frame part being connected to the two lateral consoles and/or the support consoles. The lateral consoles and the support consoles are connected to each other by means of crimping.

The method according to the present invention can be conducted very easily and in a way that is particular friendly for the environment. This is also the case, once the frame produced according to the invention has to be recycled.

In an advantageous embodiment of the method, the lateral consoles and the support consoles can be connected to each other by means of pre-shaped lock connections. These pre-shaped lock connections are a further possibility to connect these two parts of the frame in order to improve the effect provided by the crimping connections.

Still further, it is possible that the lateral consoles and the support consoles are connected to each other by means of plastic deformation of embossed hole flanges. The embossed hole flanges can be used as an alternative or in addition to the pre-shaped lock connections.

The present invention is described with reference to the accompanying drawings, in which certain embodiments of the invention are shown. This invention may, however, be embodied in many different forms and should not be construed as limited to the embodiments that are pictured and described herein. It will also be appreciated that the embodiments disclosed herein can be combined in any way and/or combination to provide many additional embodiments.

Unless otherwise defined, all technical and scientific terms that are used in this disclosure have the same meaning as commonly understood by one of ordinary skill in the art to which this invention belongs. The terminology used in the below description is for the purpose of describing particular embodiments only and is not intended to be limiting of the invention. As used in this disclosure, the singular forms "a", "an" and "the" are intended to include the plural forms as well, unless the context clearly indicates otherwise. In addition, it should be noted that terms such as "comprising", "having" or "with" do not exclude other features.

In the schematical figures of the drawings, elements that are functionally identical are denoted by the same reference labels.

In the drawings:
- Fig. 1: is a very schemativ view of a passenger seat according to the present invention;
- Fig. 2: is a perspective view of a backrest for a passenger seat according to the present invention;
- Fig. 3: is a view similar to fig. 2;

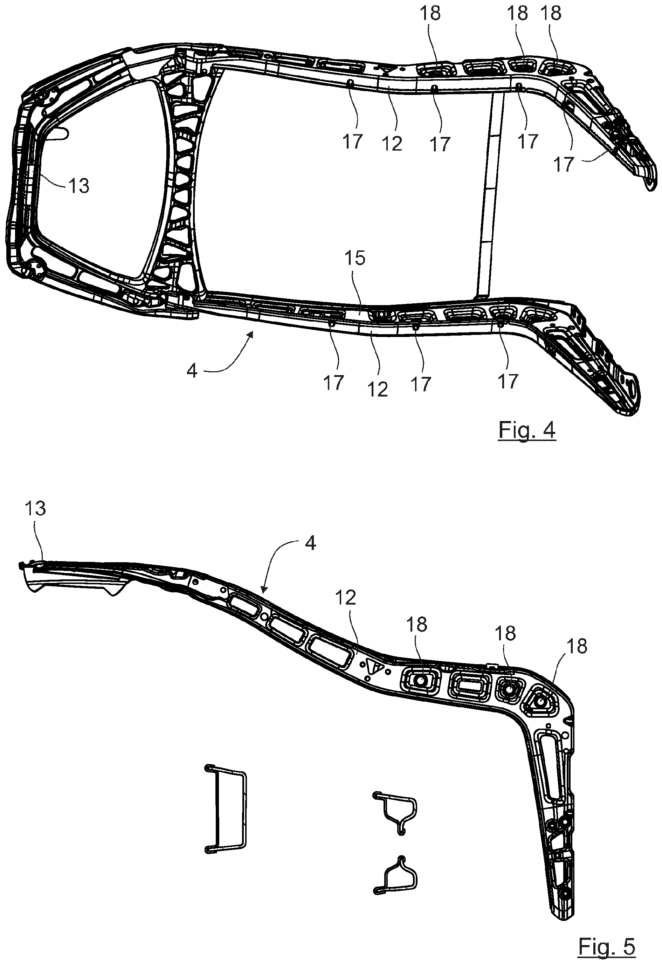

- Fig. 4: is a perspective view of a frame for the backrest according to the present invention;
- Fig. 5: is a side view of the frame of fig. 4;

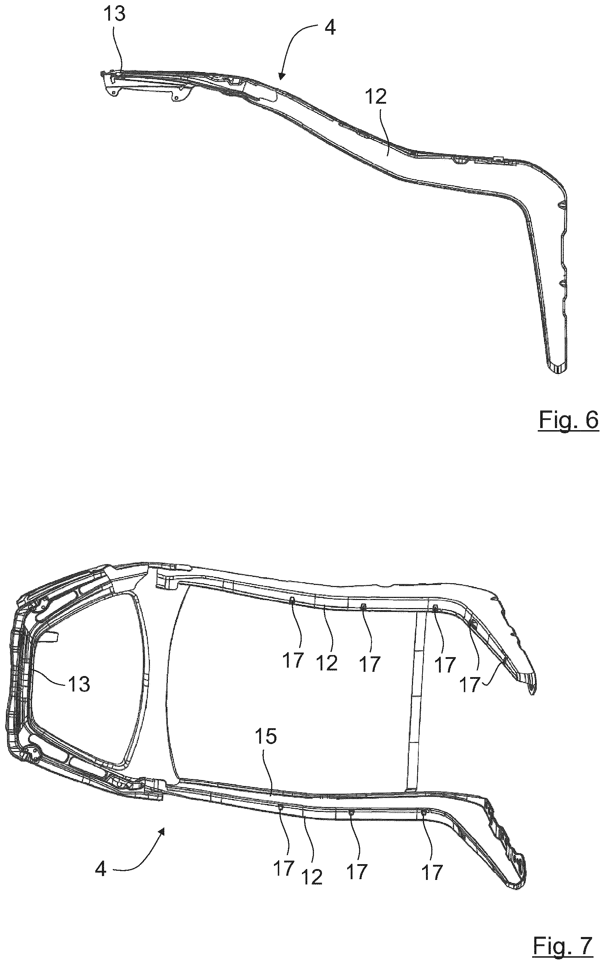

- Fig. 6: is a view similar to fig. 5;
- Fig. 7: is a view similar to fig. 4;
- Fig. 8: is an enlarged view of a part of the frame;
- Fig. 9: is a further enlarged view of a part of the frame;and
- Fig. 10: is a sectional view showing a detail of the frame for the backrest according to the present invention.

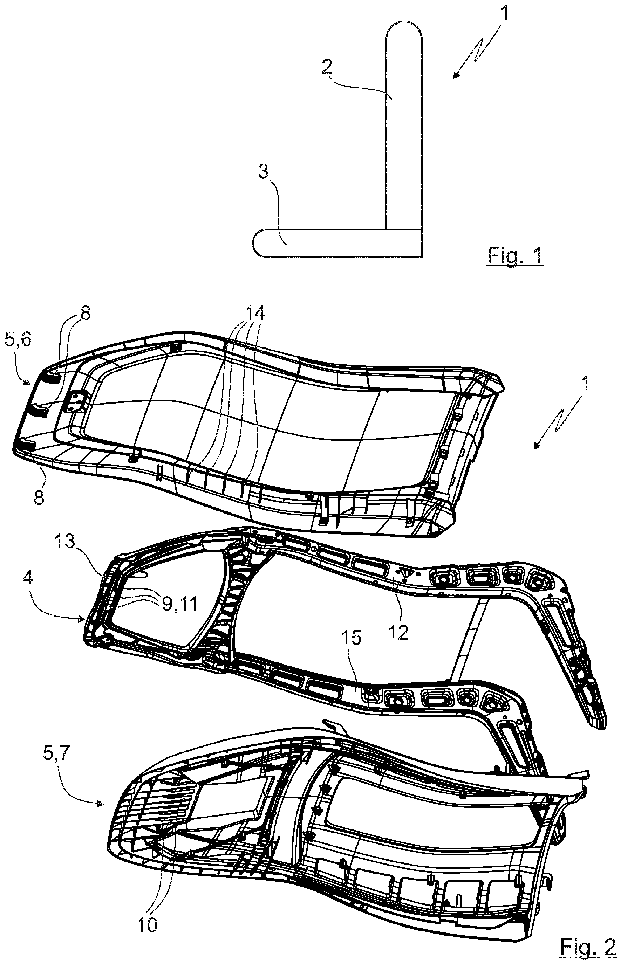

Fig. 1 is a very schematical view of a passenger seat 1, in particular a passenger seat 1 in a bus, a train and the like. In a manner known per se, the passenger seat 1 comprises a backrest 2 and a seat cushion 3.

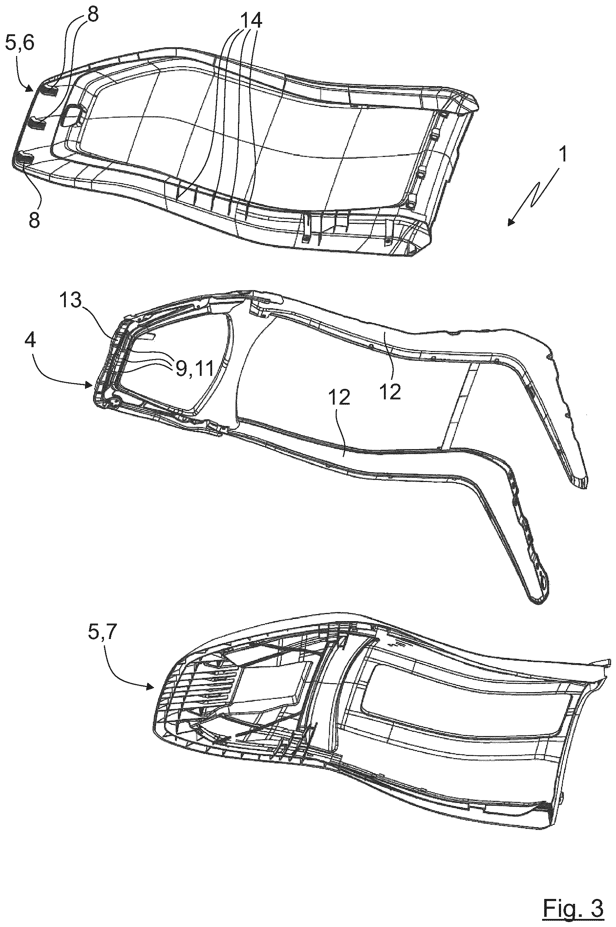

The backrest 2 is shown in figures 2 and 3 in a perspective view and in more detail. It comprises a frame 4 and an insert 5. The insert 5 comprises a rear cover 6 and a supporting part 7 for an upholstery not shown in the drawings. When attached to the frame 4, the rear cover 6 covers the back side or rear of the frame 4 and constitutes the outer shell of the passenger seat 1 on the back side thereof.

In the present case, the frame 4 is made of a metal material, in particular a steel material, while the insert 5 is made of a plastic material. Furthermore, the insert 5 is configured to improve the structural stiffness of the backrest 2.

In the present case, both the rear cover 6 as well as the supporting part 7 for the upholstery are configured to improve the structural stiffness of the backrest 2.

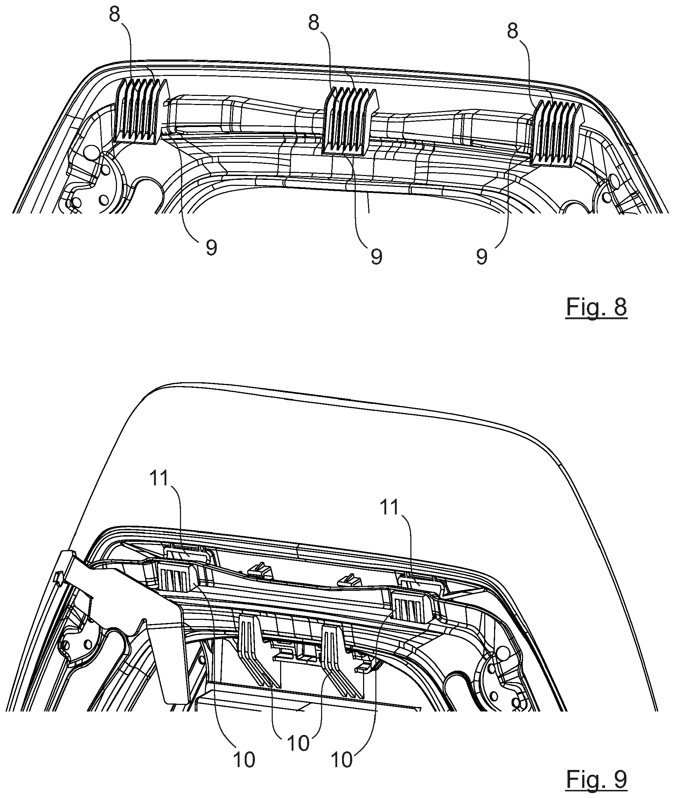

To attach the rear cover 6 to the frame 4, the rear cover 6 comprises hooks 8 which are in engagement with the frame 4. In the present case, the hooks 8 of the rear cover 6 are in engagement with recesses 9 in the frame 4. This can be seen in detail in fig. 8.

Similarly, to attach the supporting part 7 to the frame 4, the supporting part 7 comprises hooks 10 which are in engagement with the frame 4. In the present case, the hooks 10 of the supporting part 7 are in engagement with recesses 11 in the frame 4. This can be seen in detail in fig. 9. Although not clearly visible in fig. 2, the recesses 11 are on the other side of the frame 4 than the recesses 9.

In the present embodiment, as can be seen in figures 2 and 3, the frame 4 comprises two lateral consoles 12 connected by an upper headrest frame part 13. Furthermore, the hooks 8 of the rear cover 6 and/or the hooks 10 of the supporting part 7 are in engagement with the upper headrest frame part 13 of the frame 4. In other words, the recesses 9 and/or 11 are placed in the upper headrest frame part 13 of the frame 4.

The rear cover 6 comprises ribs 14 for supporting the lateral consoles 12 of the frame 4.

The supporting part 7 is connected to the rear cover 6 by means of at least one screw not shown in the drawings. Similarly, the supporting part 7 is connected to the frame 4 by means of at least one screw also not shown in the drawings.

In addition to the two lateral consoles 12, the frame 4 also comprises two support consoles 15 for supporting the lateral consoles 12. The lateral consoles 12, which can also be designated as the main consoles, are located at the exterior part of the frame 4, while the support consoles 15 are located at the internal part of the frame 4. The upper headrest frame part 13 is connected to the two lateral concoles 12 and/or the two support consoles 15, preferably to both, i.e. to the two lateral concoles 12 and to the two support consoles 15. Furthermore, the lateral concoles 12 and the support consoles 15 are connected to each other by means of crimping connections 16.

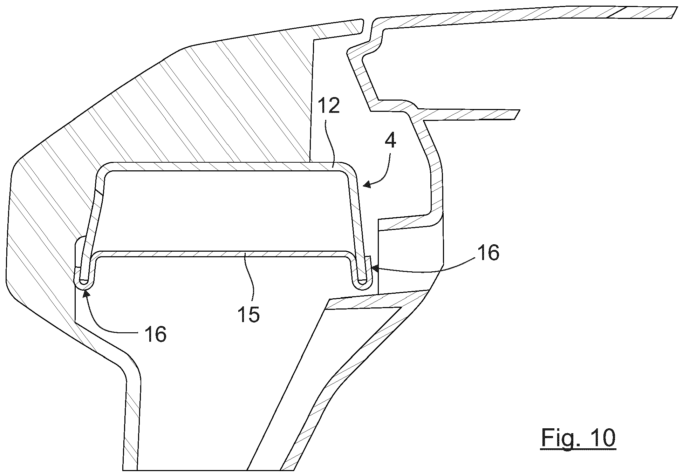

One of the crimping connections 16 is shown in detail in fig. 10. As can be seen, in the present case the material of the support console 15 is crimped or folded around the material of the lateral console 12. In principle, this could also be done the other way round, i.e. crimping or folding the material of the lateral console 12 around the material of the support console 15.

In the present case, the crimping connections 16 extend at least approximately around the full circumference of the lateral concoles 12 and the support consoles 15. In the present embodiment, the lateral concoles 12 and the support consoles 15 are also connected to each other by means of pre-shaped lock connections 17, which are only present in a few critical areas. In addition, the lateral concoles 12 and the support consoles 15 are connected to each other by means of plastic deformation of embossed hole flanges 18, which are also only present in a few critical areas.

## Claims

1. Frame (4) for a backrest (2) of a passenger seat (1), in particular a passenger seat (1) in a bus, train and the like, comprising:
- two lateral consoles (12),
- two support consoles (15),
- an upper headrest frame part (13) being connected to the two lateral consoles (12) and/or the two support consoles (15),
**characterized in that**
the lateral consoles (12) and the support consoles (15) are connected to each other by means of crimping connections (16).

2. Frame according to claim 1,
**characterized in that**
the crimping connections (16) extend at least approximately around the full circumference of the lateral consoles (12) and the support consoles (15).

3. Frame according to claim 1 or 2,
**characterized in that**
the lateral consoles (12) and the support consoles (15) are connected to each other by means of pre-shaped lock connections (17).

4. Frame according to claim 1, 2 or 3,
**characterized in that**
the lateral consoles (12) and the support consoles (15) are connected to each other by means of plastic deformation of embossed hole flanges (18).

5. Backrest (2) of a passenger seat (1), in particular a passenger seat (1) in a bus, train and the like, comprising a frame (4) according to one of claims 1 to 4 and an insert (5) connected to the frame (4).

6. Passenger seat (1), in particular for a bus, train and the like, having a seat cushion (3) and a backrest (2) according to claim 5.

7. Method for manufacturing a frame (4) for a backrest (2) of a passenger seat (1), in particular for a passenger seat (1) in a bus, train and the like, comprising:
- providing two lateral consoles (12),
- providing two support consoles (15),
- providing an upper headrest frame part (13) and connecting the upper headrest frame part (13) to the two lateral consoles (12) and/or the two support consoles (15),
**characterized in that**
the lateral consoles (12) and the support consoles (15) are connected to each other by means of crimping connections (16).

8. Method according to claim 7,
**characterized in that**
the lateral consoles (12) and the support consoles (15) are connected to each other by means of pre-shaped lock connections (17).

9. Method according to claim 7 or 8,
**characterized in that**
the lateral consoles (12) and the support consoles (15) are connected to each other by means of plastic deformation of embossed hole flanges (18).
